# EUROPÄISCHE PATENTSCHRIFT

(11) **EP 1 604 875 B1**
(45) Veröffentlichungstag und Bekanntmachung des Hinweises auf die Patenterteilung: **03.09.2008**
(21) Anmeldenummer: 05104939.3
(22) Anmeldetag: 07.06.2005
(51) Int. Cl.: B60R 22/03

(54) **Vorrichtung zum motorischen Bewegen eines Sicherheitsgurts im Kraftfahrzeug**
Device for the motorized movement of a safety belt in a motor vehicle
Dispositif pour le déplacement motorisé d'une ceinture de sécurité dans un véhicule automobile

(30) Priorität: 11.06.2004 DE 102004028281
(43) Veröffentlichungstag der Anmeldung: 14.12.2005
(73) Patentinhaber: ROBERT BOSCH GMBH, 70442 Stuttgart (DE)
(72) Erfinder: Dankowski, Konrad, 67760, Gambsheim (FR); Ihle, Daniel, 77815, Buehl-Altschweier (DE); Strominski, Christine, 77839, Lichtenau (DE)

(56) Entgegenhaltungen:
- EP-B- 0 542 773
- US-A- 4 175 633

## Beschreibung

### Stand der Technik

Die Erfindung betrifft eine Vorrichtung zum motorischen Verstellen eines Sicherheitsgurts im Kraftfahrzeug nach der Gattung des unabhängigen Anspruchs 1.

Mit der EP 0 542 773 B1 ist ein solches Sicherheitsgurt-Anbietersystem bekannt geworden, bei dem eine elektromotorische Antriebseinheit mittels eines Abtriebsritzels eine Zahnstange in einer Führungshülle in Längsrichtung verschiebt. Dabei erstreckt sich die Führungshülle im wesentlichen über die gesamte Länge der Zahnstange und wird direkt an der Karosserie befestigt. Die Führungshülle ist bei einer solchen Ausführung in der Regel als metallenes Biege-Stanzteil ausgeführt, an dem ein Befestigungsflansch zur Anbindung an die Karosserie angeordnet ist. Die elektrische Antriebseinheit wird dann mit Verbindungselementen ebenfalls am Befestigungsflansch derart befestigt, dass das Abtriebsritzel in die Zahnstange eingreift. Eine solche Vorrichtung weist ein relativ hohes Gewicht auf und ist kostenintensiv in der Fertigung.

Mit der US 3,842,929 ist eine Gurthaltevorrichtung bekannt geworden, bei der eine Flexwelle elektromotorisch verschoben wird. Die Flexwelle wiederum verschiebt ein Schiebeelement in einer separaten Führungsschiene, wobei eine Gurtöhse beweglich mit dem Schiebeelement verbunden ist.

### Vorteile der Erfindung

Die erfindungsgemäße Vorrichtung zum motorischen Bewegen eines Sicherheitsgurts mit den kennzeichnenden Merkmalen des unabhängigen Anspruchs 1 hat den Vorteil, dass durch die Integration des Führungselements der Zahnstange in das Getriebegehäuse der elektrischen Antriebseinheit sowohl die separate Fertigung der Führungsschiene, als auch des Befestigungsflansches entfällt. Außerdem erübrigt durch die Integration des Führungselements in das Getriebegehäuse der Montagschritt zur Befestigung der elektrischen Antriebseinheit am Befestigungsflansch bzw. am Führungselement. Durch die Fertigung des Getriebegehäuse mit dem Führungselement als ein Bauteil kann der Achsabstand zwischen der Zahnstange und dem Abtriebselement exakter gefertigt werden, wodurch der Verschleiß reduziert wird.

Durch die in den Unteransprüchen aufgeführten Maßnahmen ergeben sich vorteilhafte Weiterbildungen und Verbesserungen der im Anspruch 1 angegebenen Merkmale. Durch die Fertigung des Getriebegehäuses mit dem Führungselement aus Kunststoff wird das Gesamtgewicht des Gurtbringers deutlich reduziert, da das Führungselement außerdem deutlich kürzer ausgebildet ist, als die Länge der Zahnstange. Durch die Herstellung mittels Spritzgießen entfällt die relativ teuere Blechverarbeitung herkömmlicher Führungsschienen und Befestigungsflansche. Durch die einteilige Ausbildung des Führungselements mit dem Getriebegehäuse kann das Abtriebsritzel besonders günstig von diesem Bauteil umschlossen werden, so dass die Lagerung des Abtriebsritzels und der Zahnstange zueinander sehr stabil und verschleißfest ausgeführt werden kann.

Von Vorteil ist es, an beiden Enden des Führungselements Öffnungen anzuformen, durch die die Zahnstange in beiden Richtungen durchgeschoben werden kann. Dadurch kann das Führungselement relativ kurz ausgebildet werden, wodurch der Werkstoffbedarf - und damit Gewicht -, sowie Verarbeitungskosten erheblich reduziert werden.

Entspricht die Länge des Führungselements beispielsweise in etwa der Länge des Getriebegehäuses, so ergibt sich durch die kürzere Gleitfläche des Führungselements ein gleichmäßigeres, angenehmeres Schleifgeräusch zwischen der Zahnstange und dem Getriebegehäuse. Außerdem erhält man ein sehr kompakt bauenden Gurtbringer, der aufgrund der an beiden Enden offene Führungsschiene einen karosseriefesten Anschlag nutzen kann.

In einer vorteilhaften Ausführung besteht das Getriebegehäuse aus einem Grundkörper und einem Getriebedeckel, deren Trennfläche im wesentlichen quer zur Achse des Abtriebsritzels angeordnet ist. Das Führungselement kann hierbei sowohl in den Grundkörper als auch in den Deckel oder in die Trennebene integriert sein. Durch eine solche Anordnung kann in einem Montageschritt das Getriebegehäuse fest verschlossen und damit das Führungselement an der Antriebseinheit befestigt werden.

Ist das Abtriebsritzel gemeinsam mit einem Schneckenrad als ein Bauteil ausgebildet, kann über das Schneckengetriebe der Elektromotor sowohl kraftschlüssig als auch mechanisch spielfrei am Getriebegehäuse befestigt werden. Dadurch entfällt eine separate Befestigung des relativ schweren Elektromotors.

Aufgrund der Integration des Führungselements in das Getriebegehäuse kann an diesem sehr einfach eine axiale Anlauffläche zur axialen Fixierung des Abtriebsritzels angeordnet werden. Dadurch entfällt eine Justierung des Abtriebsritzels gegenüber der Zahnstange.

Aufgrund dem Durchschieben der Zahnstange durch die Öffnungen des Führungselements, kann für die Ruhestellung des Gurtbringers eine an der Karosserie angeordnete Anschlagsfläche genutzt werden. Durch die elastische Ausbildung der Zahnstange kann diese beim Erreichen des Anschlags seitlich ausweichen, wodurch eine elastische Dämpfung erzielt wird. Hierdurch kann die Lebensdauer, bzw. das übertragbare Blockmoment und dessen Zyklen erhöht werden. Außerdem reduziert sich dadurch die Belastung der Verzahnung zwischen Zahnstange und Abtriebselement. Gegenüber der herkömmlichen Ausführung der Führungsschiene mit einem am Ende integrierten Anschlagspuffer kann außerdem der Verstellweg der Zahnstange entsprechend erhöht werden.

In einer weiteren vorteilhaften Ausführung weist der Gurtbringer eine Positionserfassung auf, bei dem die Position der Zahnstange mittels über den Verstellweg gezählten Impulsen erfasst wird. Zur Ermittlung einer unveränderlichen Null-Position kann hierbei das freie Ende der Zahnstange gegen einen karosseriefesten Anschlag gefahren werden, bis der Elektromotor zum Stillstand kommt. Durch solch einen "Blockanlauf" kann sowohl vor Inbetriebnahme des Systems, als auch zur Nachjustierung desselben, jederzeit die Null-Position als Referenz angefahren werden.

In einer Weiterbildung der erFmdungsgemäßen Ausführung ist für die Ruheposition des Gurtbringers eine Soft-Stop-Funktion realisiert, indem nach der Durchführung des Referenzlaufs im laufenden Betrieb die Zahnstange über die Positionserfassungseinrichtung kurz vor Erreichen des karosseriefesten Anschlags gestoppt wird.

In einer alternativen Ausführung kann an dem Anschlag an der Karosserie ein Dämpfelement befestigt werden, wodurch die Mechanik des Verstellsystems beim Erreichen des Anschlags zusätzlich elastisch gebremst wird.

### Zeichnungen

In der Zeichnung sind Ausführungsbeispiele erfindungsgemäßer Vorrichtungen zum motorischen Bewegen eines Sicherheitsgurts dargestellt und in der nachfolgenden Beschreibung näher erläutert. Es zeigen
Fig. 1 einen erfindungsgemäßen, in eine Karosserie eingebauten Gurtbringer,
Fig. 2 und Fig. 3 zwei Ansichten einer weiteren Ausführung eines Gurtbringers ohne Zahnstange,
Fig. 4 ein weiteres Ausführungsbeispiel eines Gurtbringers mit einer Befestigungsvorrichtung,
Fig. 5 einen Schnitt durch das Getriebegehäuse der Ausführung aus Fig. 4,
Fig. 6 die schematische Darstellung des Blockanlaufs der Zahnstange und
Fig. 7 einen Gurtbringer nach dem Stand der Technik.

### Beschreibung der Ausführungsbeispiele

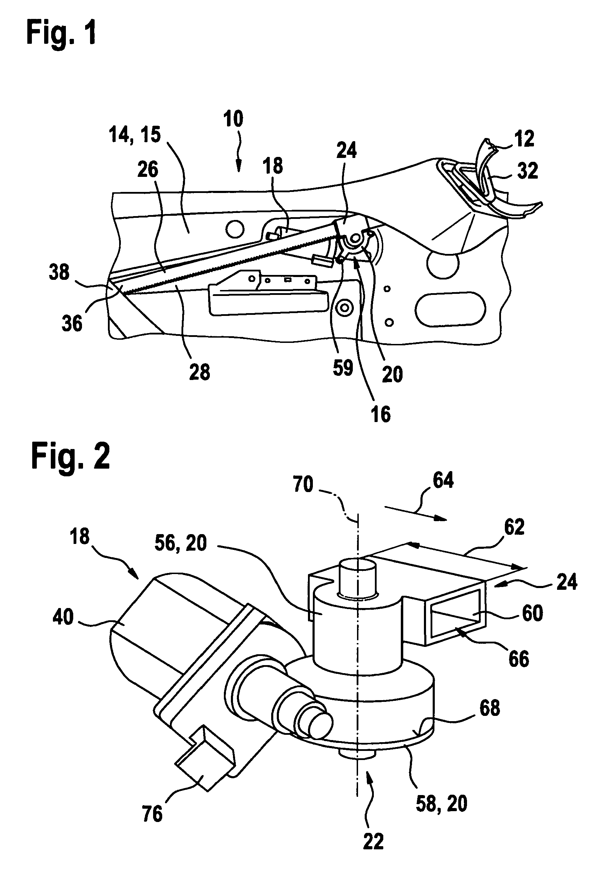

In Fig. 1 ist eine Vorrichtung 10 zur motorischen Bewegung eines Sicherheitsgurts 12 dargestellt, die in eine Seitenwand 14 einer Karosserie 15 eingebaut ist, wie sie beispielsweise in einem Coupe, welches nur im Bereich der Vordersitze Türen aufweist, verwendet wird. Die Vorrichtung 10 weist eine elektrische Antriebseinheit 16 mit einem Elektromotor 18 und einem in einem Getriebegehäuse 20 angeordneten Getriebe 22 auf. Die elektrische Antriebseinheit 16 ist fest an der Seitenwand 14 montiert. Am Getriebegehäuse 20 ist als integrativer Bestandteil ein Führungselement 24 für eine Zahnstange 26 angeformt, die wie die Antriebseinheit 16 in einer Ausformung 28 der Seitenwand 14 angeordnet ist. An einem vorderen Ende 30 ist an der Zahnstange 26 eine Triangel 32 angeordnet, durch die der Sicherheitsgurt 12 hindurchgeführt ist. In der dargestellten Ruhestellung 34 liegt die Zahnstange 26 mit einem hinteren Ende 36 an einem Anschlag 38 der Karosserie 15 an. Wird beispielsweise das Zündschloss des Kraftfahrzeugs betätigt, bewegt die Vorrichtung 10 den Gurt 12 automatisch von hinten auf den Fahrer auf dem Fahrersitz zu, so dass dieser den Gurt 12 bequem erreichen kann.

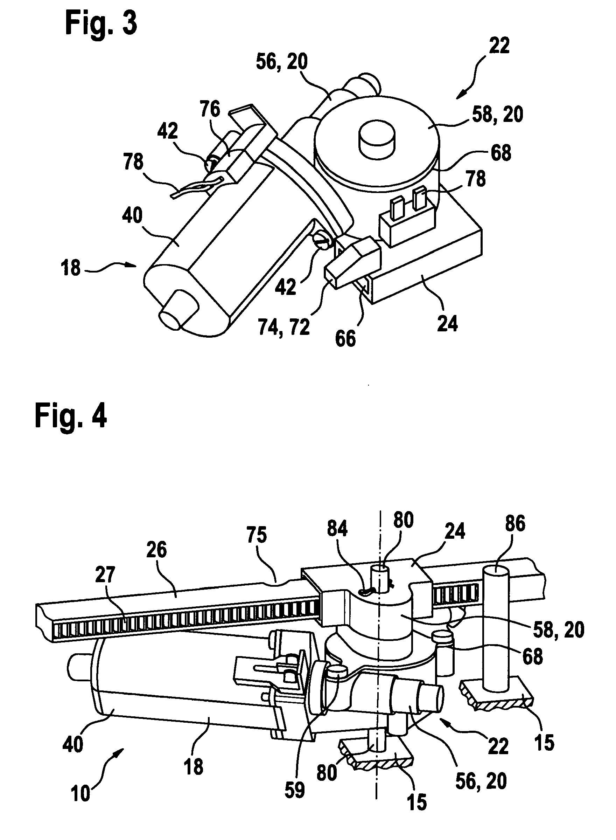

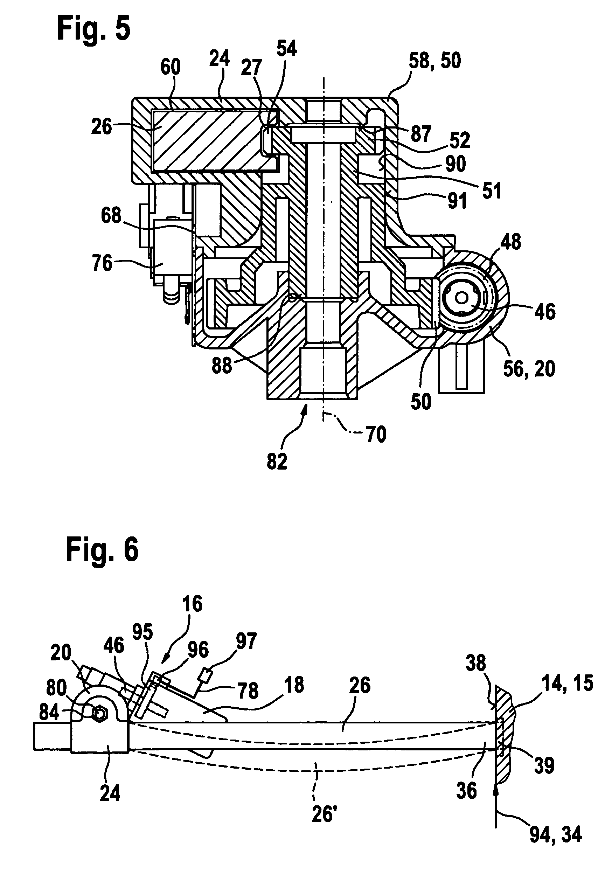

In Fig. 2 und 3 ist eine weitere elektrische Antriebseinheit 16 vergrößert dargestellt, wobei der Elektromotor 18 einen Poltopf 40 aufweist, der mittels Verbindungselementen 42, beispielsweise Schrauben 42 fest mit dem Getriebegehäuse 20 verbunden ist. Der Elektromotor 18 ist über eine auf einer Ankerwelle 46 angeordnete Schnecke 48 mit einem Schneckenrad 50 wirkverbunden, wie dies in Fig. 5 näher dargestellt ist. Das Schneckenrad 50 wiederum ist starr mit einem Abtriebsritzel 52 verbunden, das mit seiner Verzahnung 54 in die nicht näher dargestellte Zahnstange 26 greift. Das Getriebegehäuse 20 weist im Ausführungsbeispiel einen Grundkörper 56 auf, der sowohl die Ankerwelle 46 als auch das Schneckenrad 50 und das Abtriebsritzel 52 umschließt. Im Bereich des Abtriebsritzels 52 ist an das Getriebegehäuse einstückig das Führungselement 24 angeformt, das die Zahnstange 26 aufnehmen kann. Das Führungselement 24 weist ein im wesentlichen rechteckigen Querschnitt 60 auf und erstreckt sich über eine Länge 62, die in etwa der Abmessung des Getriebegehäuses 20 entlang der Längsrichtung 64 der Zahnstange 26 entspricht. Das Führungselement 24 weist an seinen beiden Enden Öffnungen 66 auf, durch die die Zahnstange 26 hindurchschiebbar ist. Das Getriebegehäuse 20 weist des weiteren einen Getriebedeckel 58 auf, um das Schneckenrad 50 abzuschließen, wobei eine Trenn-Ebene 68 zwischen dem Getriebedeckel 58 und dem Grundkörper 56 näherungsweise senkrecht zu einer Achse 70 des Antriebsritzels 52 und des Schneckenrads 50 angeordnet ist. Das Abtriebsritzel 52 ist hierbei vollständig innerhalb des Getriebegehäuses 20, beispielsweise auf einer im Getriebegehäuse 20 angeordneten Welle gelagert. Das Getriebegehäuse 20 ist aus Kunststoff, vorzugsweise mittels Spritzgussverfahren hergestellt.

In Fig. 3 ist am Führungselement 24 als Positionserfassungsvorrichtung 72 ein Mikroschalter 74 angeordnet, der in entsprechende Schaltkerben 75 der Zahnstange 26 greift. Der Mikroschalter 74 ist ebenso wie ein Steckkontakt 76 am Elektromotor 18 mit nicht näher dargestellten elektrischen Anschlüssen 78 verbunden.

Fig. 4 zeigt ein weiteres Ausführungsbeispiel eines Gurtbringers 10 mit einer im Führungselement 24 angeordneten Zahnstange 26. Die Zahnstange 26 ragt aus den beiden Öffnungen 66, wobei am vorderen Ende 30 der Zahnstange die Triangel 32 für den Gurt 12 angeordnet ist und das hintere Ende 36 gegen einen Anschlag 38 bewegbar ist. Das nicht näher sichtbare Abtriebsritzel 52 greift mit seiner Verzahnung 54 in die Zähne 27 der Zahnstange 26 ein, wobei der Abstand zwischen dem Abtriebsritzel 52 und der Zahnstange 26 durch das einteilig mit dem Getriebegehäuse 20 ausgebildete Führungselement 24 fest vorgegeben ist. Die Trennebene 68 zwischen dem Deckel 58 und dem Grundkörper 56 des Getriebegehäuses 20 liegt in diesem Ausführungsbeispiel zwischen dem Schneckenrad 50 und dem Abtriebsritzel 52. Die beiden Gehäuseteile 56, 58 sind mit Verbindungsmitteln 59 fest miteinander verbunden, so dass mit der fertigen Montage des Getriebegehäuses 20 auch die Zahnstange 26 kraftschlüssig mit dem Elektromotor 18 verbunden ist. Die Vorrichtung 10 ist hierbei mittels eines karosseriefesten Bolzens 80, der eine Durchgangsbohrung 82 des Getriebegehäuses 20 durchdringt, mit der Seitenwand 14 verbunden. Zur axialen Fixierung der Vorrichtung 10 ist diese mit einem Sicherungselement 84 auf den Bolzen 80 fixiert. Da das Getriebegehäuse 20 gegenüber dem festen Bolzen 80 drehbar gelagert ist, ist ein weiterer karosseriefester Stift 86 vorgesehen, der die Winkellage der Vorrichtung 10 fixiert.

In Fig. 5 ist ein vergrößerter Schnitt durch das Getriebegehäuse in Fig. 4 gemäß der Linie V-V dargestellt. Das Abtriebselement 52 ist hierbei einteilig mit dem Schneckenrad 50 ausgebildet, die beide eine zentrale Durchgangsbohrung 82 zur Befestigung mittels des karosseriefesten Bolzens 80 aufweisen. Das Schneckenrad 50 und die Ankerwelle 46 sind im wesentlichen von einem ersten Getriebegehäuseteil 56 umschlossen und das Abtriebsritzel 52 vom zweiten Getriebegehäuseteil 58 in den das Führungselement 24 integriert ist, umschlossen. Das Abtriebsritzel 52 und das Schneckenrad 50 bilden ein gemeinsames Bauteil 51, das vollständig im Getriebegehäuse 20 gelagert ist. Hierzu weist das Getriebegehäuse 20 axiale Anlaufflächen 87, 88 auf, an denen das Antriebsritzel 52 und das Schneckenrad 50 zur axialen Lagerung anliegen. Die radiale Lagerung des Bauteils 51 erfolgt über eine Umfangsfläche 90, die in einer entsprechenden zylindrischen Ausformung 91 im Getriebegehäuse 20 geführt ist. Die Verzahnung 54 des Abtriebsritzels 52 weist hierbei einen defmierten Abstand zu den Zähnen 27 der Zahnstange 26 auf. Zur Befestigung des Getriebegehäuses 20 wird dieses mit der Durchgangsbohrung 82 durch das Getriebegehäuse 20 und das Bauteil 51 auf den karosseriefesten Bolzen 80 geschoben.

Fig. 6 zeigt eine schematische Darstellung der Vorrichtung 10 zur Bewegung des Gurts 12 im Betriebszustand, wobei das hintere Ende 36 der Zahnstange 26 gegen einen festen Anschlag 38 der Karosserie 15 gefahren wird. Die Zahnstange 26 ist elastisch ausgebildet, beispielsweise durch die Verwendung eines entsprechenden Kunststoffes. Erreicht das freie Ende 36 den Anschlag 38, so kann die Zahnstange 26 bis zu einem gewissen Grad seitlich abknicken. Dabei steigt der Kraftbedarf des Elektromotors 18 solange an, bis der Elektromotor 18 blockiert. Durch den dadurch verursachten Stromanstieg kann dieser Blockierzustand als Referenzposition 94 erkannt werden. Die Position der Zahnstange 26 wird hierbei mittels einer Positionserfassung 72 detektiert, die vorzugsweise einen an der Ankerwelle 46 angeordneten Impulsgeber 95 und einen mit diesen zusammenwirkenden Impulszähler 96 aufweist, die mit einer Elektronikeinheit 97 verbunden sind. Bei Erreichen der Referenzposition 94 wird dabei der Impulszähler 96 beispielsweise auf Null gesetzt, so dass durch einen Referenzlauf jederzeit die Null-Position 34 nachjustiert werden kann. In einer weiteren Ausführung mit einer Soft-Stop-Funktion wird im normalen Betrieb der Elektromotor 18 abgeschaltet, bevor das hintere Ende 36 der Zahnstange 26 den festen Anschlag 38 der Karosserie 15 erreicht. Dabei kann die Anzahl der Impulse vorgegeben werden, wie weit der Elektromotor 18 vor Erreichen der Null-Position 34 abgeschaltet werden soll. Durch das elastische seitliche Ausweichen der Zahnstange 26 wird das Blockiermoment beim Anfahren des Anschlags 38 im Getriebe 22 gedämpft.

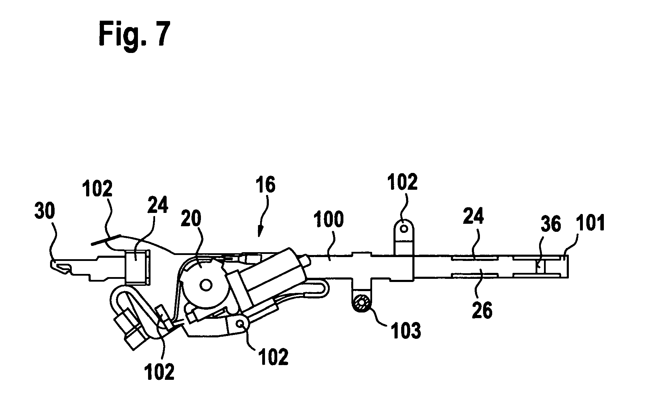

In Fig. 7 ist als Stand der Technik ein herkömmlicher Gurtbringer 10 dargestellt. Hierbei ist die Antriebseinheit 16 an einem Befestigungsflansch 100 angeschraubt, der wiederum am Führungselement 24 der Zahnstange 26 befestigt ist. Das Führungselement 24 erstreckt sich hierbei im wesentlichen über die gesamte Länge der Zahnstange 26. An einem Ende des Führungselements 24 ist ein Anschlagpuffer 101 angeordnet, um eine elastische Dämpfung beim Anfahren des hinteren Endes 36 der Zahnstange 26 gegen den Anschlag 38 zu erzielen. Der Befestigungsflansch 100 weist Aufnahmen 102 für Verbindungselemente 103 auf, mit dem der Gurtbringer 10 an der Karosserie 15 befestigbar ist. Zur Montage wird hierbei zuerst der Befestigungsflansch 100 am Führungselement 24 angeformt, und anschließend das Getriebegehäuse 20 derart mit dem Befestigungsflansch 100 verbunden, dass das Abtriebsritzel 52, das in diesem Fall aus dem Getriebegehäuse 20 ragt, in die Zähne 27 der Zahnstange 26 greift.

Es sei angemerkt, dass hinsichtlich der in den Figuren und der Beschreibung gezeigten Ausführungsbeispiele vielfältige Kombinationsmöglichkeiten der einzelnen Merkmale untereinander möglich sind. So kann beispielsweise die konkrete Ausgestaltung des Getriebegehäuses 20, des Führungselements 24, des Getriebes 22, des Motors 18 und der Befestigungsweise variiert werden, wobei erfindungswesentlich ist, dass das Führungselements 24 als ein gemeinsames Bauteil mit dem Getriebegehäuse 20 ausgebildet ist. Die Positionserfassungsvorrichtung 72 kann beispielsweise als Ringmagnet und Hallsensor ausgebildet sein, wobei optional auf einen Mikroschalter 74 verzichtet werden kann. Die Erfindung umfasst auch eine Verstellvorrichtung 10 ohne die Montage der Zahnstange 26 und kann sinngemäß auch für ähnliche lineare Verstellanwendungen, insbesondere im Kraftfahrzeug, verwendet werden.

## Patentansprüche

1. Vorrichtung (10) zum motorischen Bewegen eines Sicherheitsgurts (12) in einem Kraftfahrzeug, mit einem in einem Getriebegehäuse (20) angeordneten Getriebe (22), das ein Abtriebsritzel (52) aufweist, wobei das Abtriebsritzel (52) mit einer Zahnstange (26) kämmt, die in einem Führungselement (24) längsverschiebbar angeordnet ist, wobei das Führungselement (24) integrativer Bestandteil des Getriebegehäuses (20) ist,
**dadurch gekennzeichnet, dass** das Führungselement (24) einteilig mit einem Teil des Getriebegehäuses (20) ausgebildet ist und einen im wesentlichen rechteckigen Querschnitt (60) aufweist, wobei die Zahnstange (26) auf der dem Abtriebsritzel (52) zugewandten Seite Zähne (27) und an den anderen Seiten sich in Längsrichtung erstreckende Führungsflächen aufweist, die an Innenflächen des Führungselements (24) anliegen.

2. Vorrichtung (10) nach Anspruch 1, **dadurch gekennzeichnet, dass** das Getriebegehäuse (20) und das Führungselement (24) zusammen aus Kunststoff - insbesondere mittels Spritzgußverfahren - hergestellt sind.

3. Vorrichtung (10) nach einem der Ansprüche 1 oder 2, **dadurch gekennzeichnet, dass** das Abtriebsritzel (52) vom Getriebegehäuse (20) und dem Führungselement (24) umschlossen ist.

4. Vorrichtung (10) nach einem der vorhergehenden Ansprüche, **dadurch gekennzeichnet, dass** das Führungselement (24) in Längsrichtung (64) an beiden Enden Öffnungen (66) aufweist, aus denen jeweils die Zahnstange (26) ragt.

5. Vorrichtung (10) nach einem der vorhergehenden Ansprüche, **dadurch gekennzeichnet, dass** das Führungselement (24) in Längsrichtung (64) eine Länge (62) aufweist, die wesentlich kürzer ist als die Zahnstange (26) - und insbesondere in etwa der Abmessung des Getriebegehäuses (20) entspricht.

6. Vorrichtung (10) nach einem der vorhergehenden Ansprüche, **dadurch gekennzeichnet, dass** das Getriebegehäuse (20) einen Grundkörper (56) und einen Getriebedeckel (58) aufweist, die miteinander fest verbindbar sind, wobei das Führungselement (24) in den Grundkörper (56) oder den Getriebedeckel (58) integriert ist.

7. Vorrichtung (10) nach einem der vorhergehenden Ansprüche, **dadurch gekennzeichnet, dass** das Abtriebsritzel (52) einteilig mit einem axial versetzt angeordneten Schneckenrad (50) ausgebildet ist, das von einer Schnecke (48) eines Elektromotors (18) angetrieben wird.

8. Vorrichtung (10) nach einem der vorhergehenden Ansprüche, **dadurch gekennzeichnet, dass** das Getriebegehäuse (20) mindestens eine axiale Anlauffläche 87, 88) aufweist, an der sich das Abtriebsritzel (52) axial abstützt.

9. Vorrichtung (10) nach einem der vorhergehenden Ansprüche, **dadurch gekennzeichnet, dass** die Zahnstange (26) elastisch ausgebildet ist und beim Anfahren eines freien Endes (36, 30) der Zahnstange (26) gegen einen karosseriefesten Anschlag (38) die Zahnstange (26) quer zur Längsrichtung (64) ausknickt.

10. Vorrichtung (10) nach einem der vorhergehenden Ansprüche, **gekennzeichnet durch** eine Positionserfassungseinrichtung (72), die einen Impulsgeber (95) und einen Impulszähler (96) aufweist, wobei beim Anfahren des freien Endes (36, 30) der Zahnstange (26) gegen den karosseriefesten Anschlag (38) der Motorstrom des Elektromotors (18) ansteigt und/oder der Elektromotor (18) blockiert, wodurch eine Referenzposition (94) der Zahnstange (26) für die Positionserfassung erkannt wird.

11. Vorrichtung (10) nach einem der vorhergehenden Ansprüche, **dadurch gekennzeichnet, dass** nach der Durchführung eines Referenzlaufs die Zahnstange (26) um eine vorgebbare Anzahl von Impulsen vor dem Erreichen des karosseriefesten Anschlags (38) gestoppt wird.

12. Vorrichtung (10) nach einem der vorhergehenden Ansprüche, **dadurch gekennzeichnet, dass** der karoseriefeste Anschlag (38) ein elastisches Element (39) aufweist.

13. **Vorrichtung (10) nach einem der vorhergehenden Ansprüche, dadurch gekennzeichnet, dass das Getriebegehäuses (20) von einer Durchgangsbohrung (82) durchdrungen wird, mittels derer die Vorrichtung (10) drehbar auf einem karosseriefesten Bolzens (80) gelagert ist.**

## Claims

1. Device (10) for the motorized movement of a safety belt (12) in a motor vehicle, with a transmission (22) which is arranged in a transmission case (20) and has an output pinion (52), wherein the output pinion (52) meshes with a rack (26) which is arranged in a longitudinally displaceable manner in a guide element (24), and wherein the guide element (24) is an integrated part of the transmission case (20), **characterized in that** the guide element (24) is formed integrally with part of the transmission case (20) and has a substantially rectangular cross section (60), the rack (26) having teeth (27) on the side facing the output pinion (52) and, on the other sides, guide surfaces which extend in the longitudinal direction and bear against inner surfaces of the guide element (24).

2. Device (10) according to Claim 1, **characterized in that** the transmission case (20) and the guide element (24) are produced together from plastic - in particular by means of injection moulding.

3. Device (10) according to either of Claims 1 and 2, **characterized in that** the output pinion (52) is surrounded by the transmission case (20) and the guide element (24).

4. Device (10) according to one of the preceding claims, **characterized in that** the guide element (24) has, at both ends in the longitudinal direction (64), openings (66) from each of which the rack (26) protrudes.

5. Device (10) according to one of the preceding claims, **characterized in that** the guide element (24) in the longitudinal direction (64) is of a length (62) which is substantially shorter than the rack (26) - and in particular corresponds approximately to the size of the transmission case (20).

6. Device (10) according to one of the preceding claims, **characterized in that** the transmission case (20) has a basic body (56) and a transmission cover (58) which can be connected fixedly to each other, with the guide element (24) being integrated in the basic body (56) or in the transmission cover (58).

7. Device (10) according to one of the preceding claims, **characterized in that** the output pinion (52) is formed integrally with a worm wheel (50) which is arranged in an axially offset manner and is driven by a worm (48) of an electric motor (18).

8. Device (10) according to one of the preceding claims, **characterized in that** the transmission case (20) has at least one axial stop surface (87, 88) on which the output pinion (52) is supported axially.

9. Device (10) according to one of the preceding claims, **characterized in that** the rack (26) is of elastic design and, when a free end (36, 30) of the rack (26) collides with a stop (38) fixed on the vehicle body, the rack (26) buckles transversely with respect to the longitudinal direction (64).

10. Device (10) according to one of the preceding claims, **characterized by** a position detection device (72) which has a pulse transmitter (95) and a pulse counter (96), the motor current of the electric motor (18) rising and/or the electric motor (18) blocking when the free end (36, 30) of the rack (26) collides with the stop (38) fixed on the vehicle body, as a result of which a reference position (94) of the rack (26) is identified for the detection of the position.

11. Device (10) according to one of the preceding claims, **characterized in that**, after a reference operation is carried out, the rack (26) is stopped by a predeterminable number of pulses before the stop (38) fixed on the vehicle body is reached.

12. Device (10) according to one of the preceding claims, **characterized in that** the stop (38) fixed on the vehicle body has an elastic element (39).

13. Device (10) according to one of the preceding claims, **characterized in that** the transmission case (20) is penetrated by a passage bore (82) by means of which the device (10) is mounted rotatably on a bolt (80) fixed on the vehicle body.

## Revendications

1. Dispositif (10) pour déplacer par un entraînement motorisé, une ceinture de sécurité (12) dans un véhicule automobile comportant une transmission (22) logée dans un boîtier de transmission (20), cette transmission ayant un pignon de sortie (52),
le pignon de sortie (52) engrenant avec une crémaillère (26) montée de manière à coulisser longitudinalement dans un élément de guidage (24), l'élément de guidage (24) faisant partie intégrante du boîtier de transmission (20),
**caractérisé en ce que**
l'élément de guidage (24) est réalisé en une seule pièce avec le boîtier de transmission (20) et présente une section (60) essentiellement rectangulaire,
la crémaillère (26) ayant des dents (27) sur son côté tourné vers le pignon de sortie (52) alors que les autres côtés comportent des surfaces de guidage longitudinales s'appliquant contre les surfaces intérieures de l'élément de guidage (24).

2. Dispositif (10) selon la revendication 1,
**caractérisé en ce que**
le boîtier de transmission (20) et l'élément de guidage (24) sont réalisés en commun en matière plastique notamment par injection.

3. Dispositif (10) selon la revendication 1 ou 2,
**caractérisé en ce que**
le pignon de sortie (52) est entouré par le boîtier de transmission (20) et l'élément de guidage (24).

4. Dispositif (10) selon l'une des revendications précédentes,
**caractérisé en ce que**
l'élément de guidage (24) comporte des ouvertures (26) aux deux extrémités dans la direction longitudinale (64), et la crémaillère (26) vient en saillie par rapport à ces ouvertures.

5. Dispositif (10) selon l'une des revendications précédentes,
**caractérisé en ce que**
l'élément de guidage (24) a une longueur (62) dans la direction longitudinale (64) qui est pratiquement plus courte que la crémaillère (26), et correspond notamment sensiblement aux dimensions du boîtier de transmission (20).

6. Dispositif (10) selon l'une des revendications précédentes,
**caractérisé en ce que**
le boîtier de transmission (20) comporte un corps de base (56) et un couvercle de transmission (58), ces deux éléments étant reliés solidairement l'un à l'autre et l'élément de guidage (24) est intégré dans le corps de base (56) ou dans le couvercle de transmission (58).

7. Dispositif (10) selon l'une des revendications précédentes,
**caractérisé en ce que**
le pignon de sortie (52) est réalisé en une seule pièce avec une roue à vis (50) décalée axialement, cette roue à vis étant entraînée par la vis (48) d'un moteur électrique (18).

8. Dispositif (10) selon l'une des revendications précédentes,
**caractérisé en ce que**
le boîtier de transmission (20) comporte au moins une surface d'attaque axiale (87, 88) contre laquelle s'appuie axialement le pignon de sortie (52).

9. Dispositif (10) selon l'une des revendications précédentes,
**caractérisé en ce que**
la crémaillère (26) est élastique et lorsqu'une extrémité libre (36, 30) de la crémaillère (26) rencontre une butée (38) solidaire de la carrosserie, la crémaillère (26) fléchit transversalement à la direction longitudinale (64).

10. Dispositif (10) selon l'une des revendications précédentes,
**caractérisé par**
une installation de détection de position (72) comportant un générateur d'impulsions (95) et un compteur d'impulsions (96), et lorsque l'extrémité libre (36, 30) de la crémaillère (26) bute contre la butée (38) solidaire de la carrosserie, le courant dans le moteur électrique (18) augmente et/ou le moteur électrique (18) se bloque ce qui permet de détecter une position de référence (94) de la crémaillère (26) pour la saisie de la position.

11. Dispositif (10) selon l'une des revendications précédentes,
**caractérisé en ce qu'**
après avoir effectué une course de référence, on arrête la crémaillère (26) selon un nombre prédéfini d'impulsions, avant d'atteindre la butée (38) solidaire de la carrosserie.

12. Dispositif (10) selon l'une des revendications précédentes,
**caractérisé en ce que**
la butée (38) solidaire de la carrosserie comporte un élément élastique (39).

13. Dispositif (10) selon l'une des revendications précédentes,
**caractérisé en ce que**
le boîtier de transmission (20) est traversé par un perçage traversant (82) à l'aide duquel le dispositif (10) est monté à rotation sur un goujon (80) solidaire de la carrosserie.
